## Europäisches Patentamt

## European Patent Office

## Office européen des brevets

(11) Publication number: **0 247 682**
**B1**

## (12) EUROPEAN PATENT SPECIFICATION

(45) Date of publication of patent specification: **10.10.90**

(51) Int. Cl.⁵: **B 65 G 65/48**, B 65 D 90/60

(21) Application number: **87200937.8**

(22) Date of filing: **19.05.87**

(54) Outlet device for a container for bulk material.

(30) Priority: **23.05.86 NL 8601323**

(43) Date of publication of application:
**02.12.87 Bulletin 87/49**

(45) Publication of the grant of the patent:
**10.10.90 Bulletin 90/41**

(84) Designated Contracting States:
**AT BE CH DE ES FR GB GR IT LI LU NL SE**

(56) References cited:
**DE-B-1 097 905**
**DE-C- 725 739**
**US-A-3 945 537**

(73) Proprietor: **A. Wijnveen B.V.**
**Slijpkruikweg 50 Postbus 212**
**NL-6710 BE Ede (NL)**

(72) Inventor: **Jans, Johan Wilhelm**
**Barchemseweg 56**
**NL-7241 JG Lochem (NL)**

(74) Representative: **van der Kloet-Dorleijn,**
**Geertruida W.F., Drs. et al**
**EXTERPATENT Willem Witsenplein 4**
**NL-2596 BK 's-Gravenhage (NL)**

Courier Press, Leamington Spa, England.

## Description

The invention relates to an outlet device for a container for bulk material, said device comprising at least a fixed grid and a movable grid which is disposed above the fixed grid and is movable in a plane extending substantially parallel to the fixed grid, and a feed device disposed above the movable grid for feeding bulk material held in the container to the grids which are movable relative to each other.

An outlet device of this type is known from NL-A-7 908 335 and is used on the one hand for obtaining a controlled outlet delivery for the extraction of the bulk material from the container, and on the other hand for enabling cooling air to be admitted into the container for the purpose of cooling the bulk material present in the container. In a particular embodiment of the known outlet device, which is square in shape, the feed device for the bulk material and the fixed grid are combined to form a double grid having two grid surfaces disposed roughly parallel to and spaced apart from one another. The grid surfaces are constructed of elongate elements extending parallel to each other and disposed at regular intervals, the elements of the first grid surface being offset by half a spacing interval in relation to the elements of the second grid surface. The distance between the two grid surfaces and the spacing and width of the elongate elements are such that the material passing out of the container via the openings in the upper grid surface can remain lying on elements of the lower grid surface. Between the two grid surfaces of the double grid is disposed a movable grid, which consists of elongate elements which extend parallel to the elements of the fixed grid and the spacing of which is equal to that of the elements of the fixed grid. When the movable grid is moved to-and-fro in a transverse direction in relation to the longitudinal direction of the elongate elements, bulk material passes out of the container because the elements of the movable grid push the bulk material resting on the elements of the grid surface off these elements. In another embodiment of the known outlet device the grids are constructed in the same manner, but the double grid is movable and the grid mounted between the two grid surfaces of the double grid is fixed. The formation of bridges in the container is prevented by this arrangement.

Although with the known outlet device it is possible to achieve controlled delivery of the bulk material and in addition cooling air can be admitted into the container via the grids, the known construction has a number of important shortcomings. In the first place, on the extraction of the bulk material from the container the flow of product is not continuous because of the reciprocating movement of the movable grid. In addition, when the container has to be completely emptied of bulk material, the stroke of the movable grid should be approximately equal to the width of the elongate elements of the lower grid surfaces, in order to remove all the bulk material lying on these elements. The movable grid thus makes a rather long stroke, so that there is a risk that the bulk material will be damaged during its extraction because of the so-called "shearing effect". In the embodiment in which the double grid is movable, the grid moves the bulk material pressed from above onto the moving grid under full pressure. The forces required for the reciprocating movement of the grid are then relatively great. Finally, because of the square shape of the outlet device, the distribution of the bulk material over the surface of the outlet device is irregular, while cooling is also irregular.

The present invention now seeks to provide an outlet device for a container for bulk material, which is exempt from the disadvantages described.

According to the invention this aim is achieved by means of an outlet device of the type mentioned above, which is characterized in that the outlet device is made circular, the fixed grid consists of a number of flat concentric rings which are disposed in one plane and which are mounted on a fixedly suspended frame, the movable grid consists of a number of flat concentric rings which are disposed in one plane and which are mounted on a fixedly suspended frame, the movable grid consists of a number of concentric cylindrical rings joined together and is mounted eccentrically to the fixed grid (1), the number of rings in the movable grid coinciding with that of the fixed grid, and the rings of the movable grid being adapted to operate in the region of the rings of the fixed grid, thereby making a circular movement in a plane parallel to the fixed grid, and in the region of the rings of the fixed grid the feed device is provided with concentric annular openings.

With the outlet device according to the invention it is possible, during the extraction of the bulk material from the container, to obtain a very uniform flow of product, while the rate of flow can be controlled in a simple manner by varying the frequency of the circular movement of the movable grid. The outlet device can thus be used very effectively as a metering floor for a silo. In addition, a very uniform thickness of the layer of bulk material lying above the outlet device can be achieved, which is very advantageous when the bulk material held in the container has to be cooled with the aid of cooling air admitted via the outlet device.

The movable grid is preferably mounted rotatably, at its center, on an eccentric whose axis of rotation is at right angles to the fixed grid and passes through the center of the latter. The movable grid can thus be driven in a simple manner.

In an advantageous embodiment the eccentric comprises a first arm, fastened to its drive shaft and a second arm which is hingedly connected to said fixed arm and on which the movable grid is mounted, the second arm being movable between an inwardly turned position, in which the mounting point of the movable grid is situated a short distance from the axis of rotation of the eccentric, and an outwardly turned position in which the mounting point is situated at a distance from the axis of rotation such that the rings of the movable grid can during operation sweep over the entire area of the rings of the fixed grid. During metering the second arm remains in the inwardly turned position, so that the center of the movable grid describes a circle having a relatively small diameter. The movable grid then moves relatively slightly in relation to the bulk material, so that the risk of damage to the material is slight. When the container has to be emptied completely, the second arm is moved to the outwardly turned position, so that the center of the movable grid describes a circle having a relatively large diameter and thus the movable grid can slide the bulk material completely off the fixed grid.

The movement of the hinged arm from the inwardly turned position to the outwardly turned position, and vice versa, can expediently be effected automatically by reversing the direction of rotation of the eccentric, which for example can be achieved in a simple manner by reversing the polarity of the drive motor for the eccentric.

In a practical embodiment of the device according to the invention, when this arm is in the inwardly turned position, the distance between the mounting point of the movable grid and the axis of rotation of the eccentric is adjustable by means of an adjustable stop. It is thus possible to control the metering of the bulk material both by means of the speed of rotation of the eccentric.

The feed device expediently comprises a number of concentric annular elements, which are disposed above the gaps between the rings of the fixed grid, and also a conical member disposed above the central opening in the fixed grid, by means of which very uniform distribution of the bulk material over the grids can be achieved. In a particularly advantageous embodiment the annular elements and the conical member are made of sheet material, and the annular elements have a substantially ridge-roof-shaped cross-section. Through this shape of the annular elements it is ensured that the bulk material will be conducted continuously and very uniformly to the grids moving in relation to each other. Through the use of sheet material, the annular elements and the conical member can be made light in weight.

In order to be able to ensure a very good throughflow of cooling air, the walls of the annular elements and the conical member may be perforated. Cooling air is thus supplied over the entire area of the outlet device, so that very uniform cooling of the bulk material held in the container can be achieved.

For the purposes of ensuring that even products which do not flow readily, such as for example powders, can be metered from the container, the device according to the invention may be of a construction in which the annular elements consist of a number of flat rings which are disposed in one plane and which together from a second grid, above which a second movable grid is disposed, the latter consisting of a number of concentric cylindrical rings joined together, the number of rings in the second fixed grid, and the rings of the second movable grid coinciding with the number of rings in the second fixed grid, and the rings of the second movable grid being adapted to operate in the region of the rings of the second fixed grid, thereby making a circular movement in a plane parallel to said rings.

In a practical embodiment the second movable grid is mounted rotatably at its center on the same type of eccentric as that on which the first movable grid is mounted, and the two eccentrics have a common axis of rotation and are preferably disposed at an angle to one another, viewed in the direction of their axis of rotation.

The invention will now be explained with reference to an example of embodiment and with the aid of the drawing, in which:

Figure 1 is a schematic section of a preferred embodiment of an outlet device according to the invention,

Figure 2 is a schematic section of another embodiment of an outlet device according to the invention,

Figure 3 shows on a larger scale a detail III in Figure 1,

Figure 4 shows on a larger scale a detail IV in Figure 2,

Figure 5 is a top plan view of the eccentric on which the movable grid is mounted, in the inwardly turned position,

Figure 6 is a top plan view of the eccentric shown in Figure 5, but in the outwardly turned position,

Figure 7 is a top plan view of the movable grid and the fixed grid, in which the hinged arm of the eccentric is in the inwardly turned position,

Figure 8 is a top plan view corresponding to Figure 7, wherein the hinged arm of the eccentric is in the outwardly turned position.

The outlet device shown in the drawings, for a container for bulk material, is adapted to serve as a floor for a storage silo or as a floor for a cooler for bulk material, and comprises a fixed grid 1 and a movable grid 2 which is disposed above the fixed grid. The outlet device is circular in shape. The fixed grid consists of a number of concentric flat rings 3 which are disposed in one plane and are mounted on a fixedly suspended frame 4. The frame 4 is suspended in that part 5 of the container which is situated at the floor end of the latter.

The movable grid 2 consists of a number of concentric rings 6, which are joined together by means of radially extending spokes 7. The number of rings 6 of the movable grid 2 coincides with the number of rings 3 of the fixed grid 1. The rings 6 of the movable grid 2 are movable in the region of the rings 3 of the fixed grid 1. The movable grid is for this purpose rotatably mounted at its center 8, where the radially extending spokes join one another, on an eccentric 9, whose axis of rotation 10 is at right angles to the fixed grid 1 and extends through the center of the latter. The eccentric is driven, for example, by means of an electric motor 12, which is coupled via a rotating drive rod 13 and gearing 14 to the drive shaft of the eccentric. The center 8 of the movable grid can thus describe a circular movement, as the result of which the different points of the rings 6 of the movable grid 2 perform a reciprocating movement in relation to the rings 3 of the fixed grid 1.

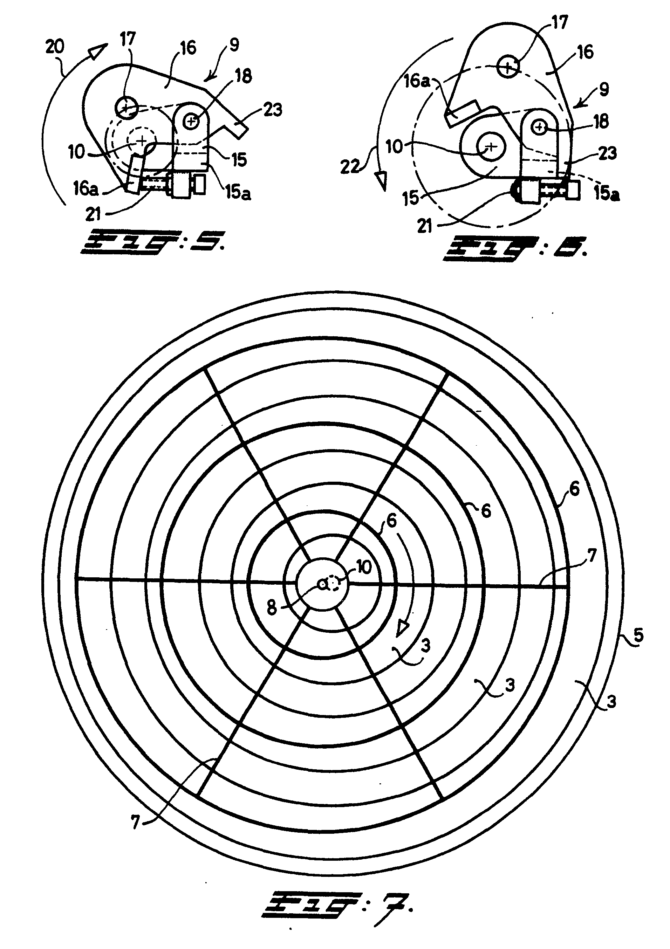

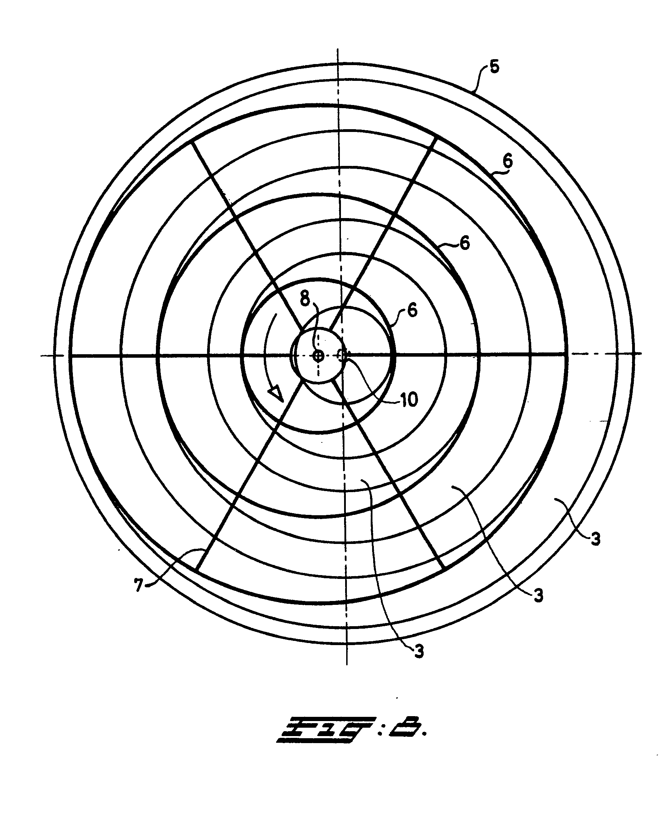

The eccentric 9 comprises a first arm 15 fastened to the drive shaft 10 and a second arm 16 which is hingedly connected to the fixed arm 15 and on which the movable grid 2 is mounted at the center of rotation 17. At the hinge point 18 the second arm 16 pivots in relation to the fixed arm 15. The second arm 16 is movable between an inwardly turned position, which is shown in Figure 5 and in which the mounting point 17 of the movable grid 2 is situated a short distance from the drive shaft 10 of the eccentric 9, and an outwardly turned position, which is shown in Figure 6 and in which the mounting point 17 is situated at such a distance from the drive shaft 10 that the rings 6 of the movable grid 2 can during the operatioon sweep over the entire area of the rings 3 of the fixed grid 1.

Figure 7 shows the position of the movable grid 2 in relation to the fixed grid 1 when the eccentric is in the inwardly turned position shown in Figure 5. The rings 6 of the movable grid then sweep over only a part (the middle part) of the rings 3 of the fixed grid 1. Figure 8 shows the position of the movable grid 2 in relation to the fixed grid 1 when the eccentric is in the outwardly turned position shown in Figure 6. The rings 6 of the movable grid then sweep over the entire area of the rings 3 of the fixed grid.

The eccentric 9 is constructed in such a manner that the movement of the hinged arm 16 from the inwardly turned position shown in Figure 5 to the outwardly turned position shown in Figure 6 and vice versa can be made automatically through the reversal of the direction of rotation of the eccentric. In Figure 5 the eccentric is shown in the position in which the drive shaft 10 turns clockwise in the direction of the arrow 20. The force exerted by the movable grid 2 on the hinged arm 16 at the center of rotation 17 ensures that the hinged arm 16, turning about the hinge point 18, will pivot in the anti-clockwise direction together with the cam 16a and will come to lie against the stop 21 on the arm 15 fastened to the drive shaft 10.

Figure 6 shows the eccentric 9 when the drive shaft 10 of the eccentric moves counter-clockwise in the direction of the arrow 22. The force exerted by the movable grid on the hinged arm 16 at the point 17 now ensures that the hinged arm 16 will pivot clockwise, turning about the hinge point 18. The hinged arm 16 is provided at the end where its hinge point 18 is situated with an extension 23, which when the hinged arm 16 pivots clockwise comes to bear at a given moment against the part 15a of the arm 15 fastened to the drive shaft 10. Depending on the direction of rotation of the drive shaft 10 of the eccentric, the hinged arm 16 thus assumes either the position shown in Figure 5 or that shown in Figure 6.

When the eccentric is in the inwardly turned position shown in Figure 5, it is possible to adjust the distance between the mounting point 17 and the drive shaft 10 by means of the stop 21, which is adjustable. The stroke of the different points of the rings 6 of the movable grid 2 in relation to the fixed grid is thus adjusted.

Above the fixed grid 1 and the movable grid 2 is disposed a feed device for the bulk material, this device being provided, in the region of the rings 3 of the fixed grid 1, with concentric annular openings 24. The width of the openings is selected so that the bulk material falling through these openings will remain lying on the rings 3 of the fixed grid when the movable grid is at rest, and will not fall downwards at the side edges of the rings 3 of the fixed grid. The feed device preferably consists of a number of concentric annular elements 26 and 26 respectively, which are disposed above the gaps 25 between the rings 3 of the fixed grid 1, together with a conical member 29 and 30 respectively, disposed above the central opening 28 of the fixed grid 11.

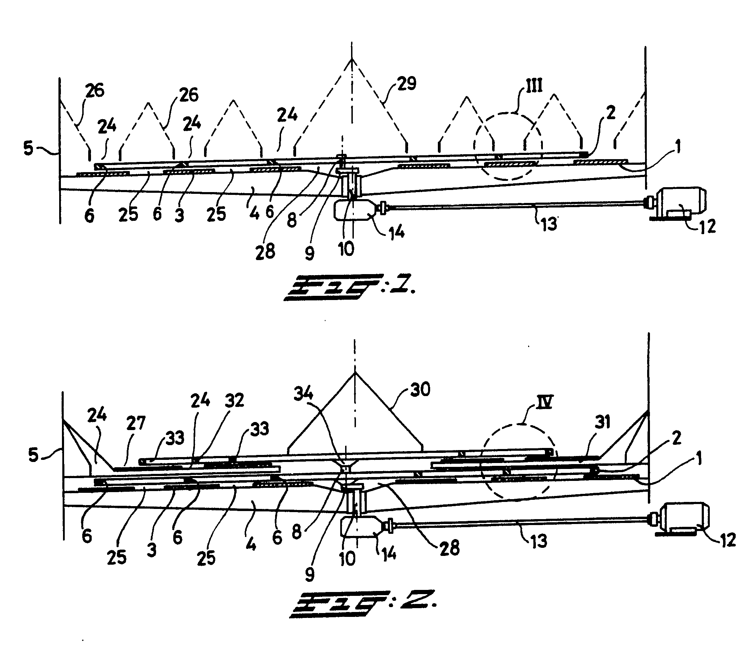

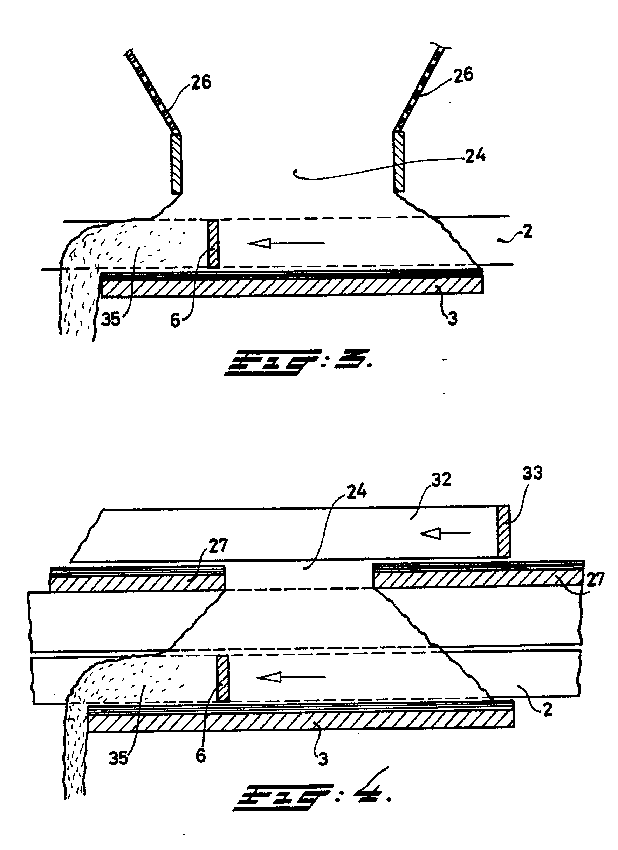

In the embodiment of the outlet device according to the invention which is shown in Figures 1 and 3, the annular elements 26 and the conical member are made of sheet material, and the annular elements 26 have a substantially ridge-roof-shaped cross-section. In addition, the walls of the annular elements 26 and the conical member 29 may be perforated. Through a construction of this type of the feed device it is ensured that the bulk material present in the container will flow continuously and uniformly to the grids which are disposed beneath this device and which are movable in relation to one another, and that in addition any cooling air which has to be supplied to the bulk mateial presenting the container can easily be supplied via the outlet device.

In the embodiment of the device according to the invention which is shown in Figures 2 and 4, the annular elements consists of a number of flat rings 27, which lie in one plane and which together form a second fixed grid 31. Above the latter is disposed a second movable grid 32, which consists of a number of concentric cylindrical rings 33 joined together. The number of rings 33 of the second movable grid 32 coincides with the number of rings 27 of the second fixed grid 31. The rings of the second movable grid 32 can operate in the region of the rings 27 of the second fixed grid 31 and thereby make a circular movement in a plane parallel to the rings 27. This embodiment of the feed device is used in particular when the container holds bulk material which does not readily flow, in which case the risk of the formation of bridges in the container is greater.

Like the first movable grid 2, the second movable grid 32 can be rotatably mounted at its center point 34 on the same type of eccentric as that on which the first movable grid 2 is mounted, the two eccentrics having the same common axis of rotation 10. The two eccentrics are preferably disposed at an angle to one another, viewed in the direction of the axis 10.

The mode of operation of the outlet device described above will be briefly explained below.

The bulk material present in the container will fall downwards through the openings 24 in the feed device and arrive on the rings 3 of the fixed grid 1. Depending on the nature of the bulk material, a poured cone having a larger or smaller embankment is thus produced (see Figures 3 and 4). While the movable grid 2 is at rest, the outlet device can also be used for allowing cooling air to enter for the purpose of cooling the bulk material present in the container. The cooling air thus flows through the space 25 between the rings 3 of the fixed grid, and then either via the perforations in the annular elements 26 and the conical member 29 (see Figure 1) or via the spaces 24 between the rings 27 of the second fixed grid 31 to the bulk material in the container. As will be clear, the embodiment of the outlet device which is shown in Figure 1 is particularly suitable for serving as a floor for a cooler for bulk material. For the metered extracton of bulk material from the container the movable grid 2 is drive with the aid of the motor 12, so that through the action of the eccentric 9 the center point of the movable grid will perform a circular movement. During the metering the eccentric 9 turns clockwise, so that the distance between the fastening point 17 of the movable grid 2 and the drive shaft 10 of the eccentric is relatively short (see Figure 5 and 7). Through the movement of the movable grid 7 the rings 6 of said grid will make a reciprocating movement in relation to the rings 3 of the fixed grid, whereby the bulk material 35 lying on the rings 3 is pushed off the latter (see Figures 3 and 4). Because of the relatively small movement of the rings 6 the risk of damage to the bulk material through the so-called "shearing effect" is very slight. As the center point of the movable grid performs a circular movement, a continuous flow of bulk material will always pass out of the container. The magnitude of the metered amount of bulk material can be controlled by adjusting the distance between the fastening point 17 of the movable grid 2 and the drive shaft 10 of the eccentric.

When the container has to be completely emptied, the direction of rotation of the eccentric is reversed, and the eccentric will then turn counter-clockwise, as shown in Figures 6 and 8. The center point of the movable grid 2 will therefore describe a much larger circle, in such a manner that the rings 6 of the movable grid will sweep over the entire area of the rings 3 of the fixed grid. This has the consequence that finally no further bulk material will remain behind on the rings 3 of the fixed grid. When the container is filled again with a different kind of bulk material, it is thus ensured that there will be no mixing of the two products.

The advantages of the above described outlet device can be summarized as follows:

For metering purposes the device enables a continuous stream of product to be obtained, while the flow can be continuously controlled by adjusting the speed of rotation of the eccentric;

The risk of damage to the bulk material during metering is very slight;

The thickness of the layer of bulk material lying above the outlet device can be kept very uniform, which is very advantageous in the cooling of the bulk material.

The full product pressure of the bulk material held in the container is not applied to the movable grid in the embodiment comprising ridge-roof-shaped annular elements in the feed device, so that the motive forces for the movable grid are relatively slight.

Finally it may be observed that the embodiment of the outlet device shown in Figures 1 and 3 is particularly suitable for serving as a floor for a cooler for bulk material, while the embodiment shown in Figures 2 and 4 is particularly suitable for serving as an outlet device for bulk material which does not flow readily.

## Claims

1. Outlet device for a container for bulk material, said device comprising at least a fixed grid (1) and a movable grid (2) which is disposed above the fixed grid and is movable in a plane extending substantially parallel to the fixed grid, and a feed device disposed above the movable grid for feeding bulk material held in the container to the grids which are movable relative to each other, characterized in that the outlet device is made circular, the fixed grid (1) consists of a number of flat concentric rings (3) which are disposed in one plane and which are mounted on a fixedly suspended frame (4), the movable grid (2) consists of a number of concentric cylindrical rings (6) joined together and is mounted eccentrically to the fixed grid (1), the number of rings (6) in the movable grid (2) coinciding with that of the fixed grid (1), and the rings (6) of the movable grid (2) being adapted to operate in the region of the rings (3) of the fixed grid (1), thereby making a circular movement in a plane parallel to the fixed grid, and in the region of rings (3) of the fixed grid (1) the feed device is provided with concentric annular openings (24).

2. Device according to Claim 1, characterized in that the movable grid (2) is mounted rotatably at its center (8) on an eccentric (9) whose axis of rotation (10) is at right angles to the fixed grid (1) and passes through the center of the latter.

3. Device according to Claim 1 or 2, characterised in that the eccentric (9) comprises a first arm (15) fastened to the drive shaft (10), and a second arm (16) which is hingedly connected to said fixed arm and on which the movable grid (2) is mounted, the second arm (16) being movable between an inwardly turned position in which the mounting point (17) of the movable grid (2) is situated a short distance from the drive shaft (10) of the eccentric (9), and an outwardly turned position in which the mounting point (17) is situated at a distance from the drive shaft (10) such that the rings (6) of the movable grid (2) can during operation sweep over the entre area of the rings (3) of the fixed grid (1).

4. Device according to Claim 3, characterised in that the movement of the hinged arm (16) from the inwardly turned position to the outwardly turned position and vice versa can be effected automatically by reversing the direction of rotation of the eccentric.

5. Device according to Claim 3 or 4, characterized in that the inwardly turned position of the second arm (16) the distance between the mounting point (17) of the movable grid (2) and the drive shaft (10) of the eccentric (9) is adjustable by means of an adjustable stop (21).

6. Device according to Claim 1 to 5, characterized in that the feed device comprises a number of concentric annular element (26, 27) which are disposed above the gaps (25) between the rings (3) of the fixed grid (1), and also a conical member (29, 30) disposed above the central opening (28) in the fixed grid (1).

7. Device according to Claim 6, characterized in that the annular elements (26) and the conical member (29) are made of sheet material and the annular elements (26) have a substantially ridge-roof-shaped cross-section, the walls of the annular elements (26) and the conical member (29) being preferably perforated.

8. Device according to Claim 6, characterized in that the annular elements consists of a number of flat rings (28) which are disposed in one plane and which together form a second fixed grid (31), above which a second movable grid (32) is disposed, the latter consisting of a number of concentric cylindrical rings (33) joined together, the number of rings (33) of the second movable grid (32) coinciding with the number of rings (27) of the second fixed grid (31), and the rings (33) of the second movable grid (32) being adapted to operate in the region of the rings (27) of the second fixed grid (31) thereby making a circular movement in a plane parallel to said rings.

9. Device according to Claim 8, characterized in that the second movable grid (32) is mounted rotatably at its center (34) on the same type of eccentric as that on which the first movable grid (2) is mounted, and the two eccentrics have a common axis of rotation (10).

10. Device according to Claim 9, characterized in that the two eccentrics are disposed at an angle to one another viewed in the direction of their axis of rotation (10).

**Patentansprüche**

1. Auslaßvorrichtung für einen Behälter für Schüttgut mit mindestens einem stationären Rost (1) und einem bewegbaren Rost (2), welcher oberhalb des stationären Rostes angeordnet und in einer Ebene bewegbar ist, die sich im wesentlichen parallel zu dem stationären Rost erstreckt, und mit einer oberhalb des bewegbaren Rostes angeordneten Beschickungsvorrichtung zum Fördern von in dem Behälter enthaltenem Schüttgut zu den relativ zu einander bewegbaren Rosten, dadurch gekennzeichnet, daß die Auslaßvorrichtung kreisförmig ausgebildet ist, daß der stationäre Rost (1) aus einer Anzahl ebener konzentrischer Ringe (3) besteht, die in einer einzigen Ebene angeordnet und an einem stationär aufgehängten Rahmen (4) befestigt sind, daß der bewegare Rost (2) aus einer Anzhal konzentrischer zylindrischer, miteinander verbundener Ringe (6) besteht und exzentrisch zu dem stationären Rost (1) montiert ist, wobei die Anzahl der Ringe (6) des bewegbaren Rostes (2) mit der des stationären Rostes (1) übereinstimmt und wobei die Ringe (6) des bewegbaren Rostes (2) im Bereich der Ringe (3) des stationären Rostes (1) betätigbar sind und dabei eine kreisförmige Bewegung in einer Ebene parallel zu dem stationären Rost durchführen, und daß im Bereich der Ringe (3) des stationären Rostes (1) die Beschickungsvorrichtung mit konzentrischen ringförmigen Öffnungen (24) versehen ist.

2. Vorrichtung nach Anspruch 1, dadurch gekennzeichnet, daß der bewegbare Rost (2) in seinem Zentrum (8) drehbar an einem Exzenter (9) befestigt ist, dessen Drehachse (10) rechtwinklig zu dem stationären Rost (1) verläuft und durch dessen Zentrum hindurchgeht.

3. Vorrichtung nach Anspruch 1 oder 2, dadurch gekennzeichnet, daß der Exzenter (9) einen ersten Arm (15), der an der Antriebswelle (10) befestigt ist, und einen zweiten Arm (16) aufweist, der an dem ersten Arm angelenkt ist und den bewegbaren Rost (2) haltert, wobei der zweite Arm (16) bewegbar ist zwischen einer nach innen gedrehten Position, in der der Befestigungspunkt (17) des bewegbaren Rostes (2) in kurzem Abstand zu der Antriebswelle (10) des Exzenters (9) liegt, und einer nach außen gedrehten Position, in der der Befestigungspunkt (17) in solchem Abstand zur Antriebswelle (10) liegt, daß die Ringe (6) des bewegbaren Rostes (2) während des Betriebes den gesamten Bereich der Ringe (3) des stationären Rostes (1) überstreichen können.

4. Vorrichtung nach Anspruch 3, dadurch gekennzeichnet, daß die Bewegung des angelenkten Armes (16) aus der nach innen gedrehten Position in die nach außen gedrehte Position und umgekehrt automatisch durch Umkehr der Drehrichtung des Exzenters hervorgerufen werden kann.

5. Vorrichtung nach Anspruch 3 oder 4, dadurch gekennzeichnet, daß in der nach innen gedrehten Position des zweiten Armes (16) der Abstand zwischen dem Befestigungspunkt (17) des bewegbaren Rostes (2) und der Antriebswelle (10) des Exzenters (9) mittels eines verstellbaren Anschlages (21) einstellbar ist.

6. Vorrichtung nach einem der Ansprüche 1 bis 5, dadurch gekennzeichnet, daß die Beschickungsvorrichtung eine Anzahl konzentrischer ringförmiger Elemente (26, 27), die oberhalb der Spalte (25) zwischen den Ringen (3) des stationären Rostes (1) angeordnet sind, sowie ein konisches Bauteil (29, 30) umfaßt, welches oberhalb der zentralen Öffnung (28) des stationären Rostes (1) sitzt.

7. Vorrichtung nach Anspruch 6, dadurch gekennzeichnet, daß die ringförmigen Elemente (26) und das konische Bauteil (29) aus Plattenmaterial bestehen und daß die ringförmigen Elemente (26) im Querschnitt im wesentlichen dachförmig ausgebildet sind, wobei die Wände der ringförmigen Elemente (26) und des konischen Bauteils (29) vorzugsweise perforiert sind.

8. Vorrichtung nach Anspruch 6, dadurch gekennzeichnet, daß die ringförmigen Elemente aus einer Anzhal ebener Ringe (28) bestehen, die in einer einzigen Ebene angeordnet sind und miteinander einen zweiten stationären Roste (31) bilden, oberhalb dessen ein zweiter bewegbarer Rost (32) angeordnet ist, der aus einer Anzahl konzentrischer zylindrischer, miteinander verbundener Ringe (33) besteht, wobei die Anzahl der Ringe (33) des zwiten bewegbaren Rostes (32) mit der Anzahl der Ringe (27) des zweiten stationären Rostes (31) übereinstimmt und wobei die Ringe (33) des zweiten bewegbaren Rostes (32) im Bereich der Ringe (27) des zweiten stationären Rostes (31) betätigbare sind und dabei eine kreisförmige Bewegung in einer Ebene parallel zu letzteren ausführen.

9. Vorrichtung nach Anspruch 8, dadurch gekennzeichnet, daß der zweite bewegbare Rost (32) in seinem Zentrum (34) drehbar an einem Exzenter befestigt ist, der seiner Art nach demjenigen entspricht, an dem der erste bewegbare Rost (32) montiert ist, wobei die beiden Exzenter eine gemeinsame Drehachse (10) aufweisen.

10. Vorrichtung nach Anspruch 9, dadurch gekennzeichnet, daß die beiden Exzenter, gesehen in Richtung ihrer Drehachse (10), im Winkel zueinander angeordnet sind.

**Revendications**

1. Dispositif de sortie pour un récipient de matière en vrac, ledit dispositif comprenant au moins une grille fixe (1) et une grille mobile (2) qui est placée au-dessus de la grille fixe et qui est déplaçable dans un plan sensiblement parallèle à la grille fixe, et un dispositif d'alimentation placé au-dessus de la grille mobile pour distribuer la matière en vrac contenue dans le récipient aux grilles qui sont mobiles l'une par rapport à l'autre, caractérisé en ce que le dispositif de sortie est circulaire, la grille fixe (1) consiste en une pluralité d'anneaux concentriques plats (3) qui sont disposés dans un même plan et qui sont montés sur un cadre suspendu de façon fixe (4), la grille mobile (2) consiste en une pluralité d'anneaux cylindriques concentriques (6) reliés les uns aux autres et elle est montée de façon excentrée par rapport à la grille mobile (2) coincidant avec celui de la grille fixe (1), et les anneaux (6) de la grille mobile (2) étant prévus pour fontionner dans la région des anneaux (3) de a grille fixe (1) et effectuant ainsi un mouvement circulaire dans un plan parallèle à la grille fixe, et, dans la région des anneaux (3) de la grille fixe (1), le dispositif d'alimentation comporte des ouvertures annulaires concentriques (24).

2. Dispositif suivant la revendication 1, caractérisé en ce que la grille mobile (2) est montée de façon tournante en son centre (8) sur un excentrique (9) dont l'axe de rotation (10) est perpendiculaire à la grille fixe (1) et passe par le centre de cette dernière.

3. Dispositif suivant la revendication 1 ou 2, caractérisé en ce que l'excentrique (9) comprend un premier bras (15), fixé à l'arbre d'entraînement (10), et un deuxième bras (16) qui est relié de façon articulée audit bras fixe et sur lequel est montée la grille mobile (2), le deuxième bras (16) étant déplaçable entre une position tournée vers l'intérieur, dans laquelle le point de montage (17) de la grille mobile (2) est situé à faible distance de l'arbre d'entraînement (10) de l'excentrique (9), et une position tournée vers l'extérieur dans laquelle le point de montage (17) est situé à distance plus grande de l'arbre d'entraînement (10) de sorte que les anneaux (6) de la grille mobile (2) peuvent, pendant le fonctionnement, balayer toute la surface des anneaux (3) de la grille fixe (1).

4. Dispositif suivant la revendication 3, caractérisé en ce que le mouvement du bras articulé (16), de la position tournée vers l'intérieur à la position tournée vers l'extérieur et vice versa, peut être effectué automatiquement par inversion du sens de rotation de l'excentrique.

5. Dispositif suivant la revendication 3 ou 4, caractérisé en ce que, dans la position tournée vers l'intérieur de deuxième bras (16), la distance entre le point de montage (17) de la grille mobile (2) et l'arbre d'entraînement (10) de l'excentrique (9) est réglable au moyen d'un butée réglable (21).

6. Dispositif suivant les revendications 1 à 5, caractérisé en cen que le dispositif d'alimentation comprend une pluralité d'éléments annulaires concentriques (26, 27) qui sont disposés au-dessus des intervalles (25) entre les anneaux (3) de la grille fixe (1), et également un élément conique (29, 30) disposé au-dessus de l'ouverture centrale (28) de la grille fixe (1).

7. Dispositif suivant la revendication 6, caractérisé en ce que les éléments annulaires (26) et l'élément conique (29); sont fabriqués en une matière en feuille et les éléments annulaires (26) ont une section transversale sensiblement en forme de toit à deux pentes, les parois des éléments annulaires (26) et de l'élément conique (29) étant de préférence perforées.

8. Dispositif suivant la revendication 6, caractérisé en ce qu les éléments annulaires consistent en une pluralité d'anneaux plats (28) qui sont disposés dans un même plan et qui constituent ensemble une deuxième grille fixe (31) au-dessus de laquelle est disposée une deuxième grille mobile (32), cette dernière consistant en une pluralité d'anneaux cylindriques concentriques (33) reliés les uns aux autres, le nombre d'anneaux (33) de la deuxième grille mobile (32) coïncident avec le nombre d'anneaux (27) de la deuxième grille fixe (31), et les anneaux (33) de la deuxième grille mobile (32) étant prévus pour fonctionner dans la région des anneaux (27) de la deuxième grille fixe (31) de mainière à effectuer un mouvement circulaire dans un plan parallèle à ces anneaux.

9. Dispositif suivant la revendication 8, caractérisé en ce que la deuxième grille mobile (32) est montée de façon tournante en son centre (34) sur le même type d'excentrique que celui sur lequel est montée la première grille mobile (2), et les deux excentriques ont un axe de rotation commun (10).

10. Dispositif suivant la revendication 9, caractérisé en ce que les deux excentriques sont disposés de façon inclinée l'un par rapport à l'autre, vus dans la directioon de leur axe de rotation (10).

_Fig:1._

_Fig:2._

EP 0 247 682 B1

*Fig: 3.*

*Fig: 4.*

FIG: 5.

FIG: 6.

FIG: 7.

FIG : 8.